# EUROPEAN PATENT APPLICATION

(11) **EP 2 685 025 A1**
(43) Date of publication of application: **15.01.2014**
(21) Application number: 13174552.3
(22) Date of filing: 01.07.2013
(51) Int. Cl.: E04D 3/36, F16B 25/00, F16B 41/00, F16B 43/00

(54) **Screw for fixing a roof member or exterior wall member both having three-layer structure**

(30) Priority: 09.07.2012 JP 2012153211
(71) Applicant: Pias Sales Co., Ltd., Osaka 557-0034 (JP)
(72) Inventor: Shinjo, Kimio, Osaka, Osaka 557-0034 (JP)
(74) Representative: Price, Paul Anthony King

(57) **Abstract**

A screw (1) includes a screw shaft (2) that has a pointed boring portion (3) on a front end thereof and has, on a rear end thereof, a head (4) with a torque transmitting hole (5). A large-diameter washer (10) is assembled, in a detent manner, to a base of the screw shaft (2) just below the head (4). The large-diameter washer (10) is provided with a pair of cutting blades (14) at respective positions that are opposite each other in a diameter direction of the large-diameter washer (10) and that are symmetrical to each other with respect to the screw shaft (2). At an initial stage of screw fastening, respective outer end edges of the pair of cutting blades (14) act as cutting blade edges (14a) to cut into a rubber sheet (23) that forms a surface layer, and then the pair of cutting blades (14) cuts through the rubber sheet (23) and enters under the rubber sheet (23). Thus, the screw shaft (2) goes straight ahead without inclination and reaches a thin steel plate (21) that forms a lower layer of a roof member (20) or an exterior wall member both having a three-layer structure such that the thin steel plate (21) is fixed to a support member (27).

## Description

### TECHNICAL FIELD

The present invention relates to a screw for fixing, to a support member, a roof member or an exterior wall member both having a three-layer structure made up of a thin steel plate, a heat insulating material and a rubber sheet of a surface layer.

### BACKGROUND ART

When constructing a roof or an exterior wall of a large building structure (a so-called metal building), a roof member or an exterior wall member both having a three-layer structure may be used. Such a three-layer structure is formed by attaching, to a thin steel plate irregularly shaped, a heat insulating material having an excellent heat keeping effect such as polyurethane foam and styrene foam, and by covering a surface layer by an insulating sheet such as a rubber sheet. In order to fix such a roof member or an exterior wall member to a support member such as a column and a beam, a screw is used. Such a screw has a head to penetrate the rubber sheet of the surface layer and a thick heat insulating material, and fastens the thin steel plate to the support member. For this reason, it is required that a fastening bearing surface of the head of the screw has a diameter larger than the head of the screw to ensure a sufficient fastening force relative to the support member.

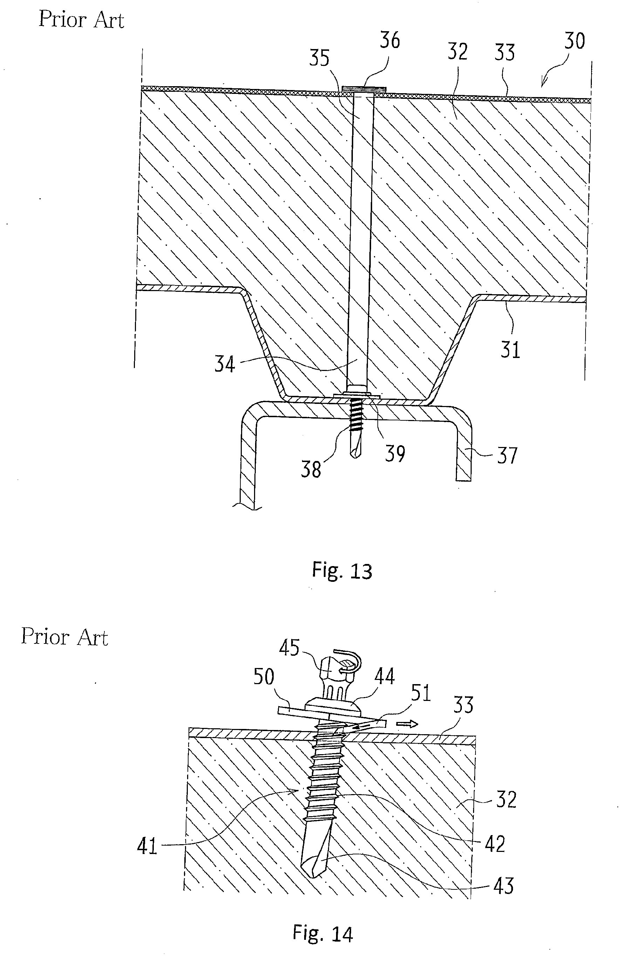

Conventional art that is mainly used for fixing a roof member or an exterior wall member 30 having the three-layer structure as described above to a support member 37 is shown, for example, in FIG. 13. At first, a mounting pilot hole 34 is cut out and hollowed out in a rubber sheet 33 of a surface layer and in a thick heat insulating material 32, using a special tool such as a hole saw (drilling cutter). Next, a drill screw 38, to which a large-diameter washer 39 having a large outer diameter is assembled, is inserted into the mounting pilot hole 34. The thin steel plate 31 of the lower layer is fastened to the steel base support member 37. Then, an opening 35 made in the rubber sheet 33 of the surface layer is covered by the patch sheet 36.

Patent Document 1 (EP1473471 B1, Description) provides a screw 41 for a laminated material. With the screw 41, it is not necessary to hollow out the mounting pilot hole 34 in advance in the rubber sheet 33 and in the heat insulating material 32, during the above-described fastening operation. Thus, it is possible to simplify the working process. Also, a construction example using the screw described in Patent Document 1 is disclosed in Non-Patent Document 1 (http://www.youtube.com/watch?v=1Y0Z6Zsipz8).

As shown in FIG. 14, the screw 41 described in Patent Document 1 has a pointed boring portion (drill) 43 on the front end thereof. To a base of a screw shaft 42 just below a screw head 44, a large-diameter washer 50 is assembled in a detent manner. The large-diameter washer 50 is cut out at one position from the outer peripheral edge to the center, and is further cut out toward the circumferential direction. Thus, a cutting blade 51 is formed so as to extend in a screw fastening direction and to incline downward toward the pointed boring portion (drill) 43. When fastening, that is, making a hole in the rubber sheet 33 by the pointed boring portion 43 to enter the screw into the heat insulating material 32, the cutting blade 51 cuts into the rubber sheet 33 and goes under the rubber sheet 33. The large-diameter washer 50 is screwed into the heat insulating material 32 as if it is a cork opener. Thus, it is not necessary to hollow out the mounting pilot hole 34 in contrast to the conventional art. However, as there is only one cutting blade 51 provided on the large-diameter washer 50, load in the lateral direction is exerted when the screw is fastened, as indicated by the arrow of FIG. 14. Furthermore, the rubber sheet 33 and the heat insulating material 32 are both soft members. Thus, the screw shaft 42 inclines and deviates from a driver bit 45 that transmits a rotational torque.

For the purpose of resolving the above problem, Non Patent Document 2 (http://www.youtube.com/watch?v=rgLBw-YcXIY) discloses a screw for a laminated material that includes an engaging portion for engaging a large-diameter bearing surface with a rotating tool on a head of the screw that has a pointed boring portion at a front end thereof, and the screw is combined with a resin part having a plurality of protruding blades on an outer periphery thereof to drill the rubber sheet. However, there remains a problem of high production costs as a result of combination of two parts, i.e. the metal screw and the resin part.

### SUMMARY OF THE INVENTION

The present invention was made in view of such circumstances, and in one embodiment provides a screw in which a large-diameter washer is assembled to a base of a screw shaft in a detent manner, and a pair of cutting blades is provided on respective positions that oppose to each other in a diameter direction of the large-diameter washer and that are symmetrical to each other with respect to the screw shaft. The screw is also configured such that, at an initial stage of screw fastening, respective outer end edges of the pair of cutting blades cut into a rubber sheet of a surface layer as cutting blade edges, and then the pair of cutting blades cuts through the rubber sheet and enters under the rubber sheet. Thus, the screw shaft goes straight ahead without inclination and attains to (reaches) a thin steel plate that forms a lower layer of a roof member or an exterior wall member both having the above-described three-layer structure such that the thin steel plate is fixed to a support member with a sufficient fastening force.

In one aspect, the present invention is configured such that a screw for fixing a roof member or an exterior wall member both having a three-layer structure includes: a screw shaft having a pointed boring portion on a front end thereof and a head on a rear end thereof, the head being provided with a torque transmitting hole; and a large-diameter washer (a washer of larger diameter than the head) assembled, in a detent manner, to a base of the screw shaft just below the head. The large-diameter washer has a blade body extending in a screw fastening direction and inclining downward toward the pointed boring portion, and the blade body has, on a free end thereof, a cutting blade extending in a radial direction. The blade body is provided on both positions that oppose to each other in a diameter direction of the large-diameter washer and that are symmetrical to each other with respect to the screw shaft. A pair of the cutting blades that is provided on the respective free ends of the pair of blade bodies extends outward in a radial direction so as to incline downward. At an initial stage of screw fastening, respective outer end edges of the pair of cutting blades act as cutting blade edges to cut into a rubber sheet that forms a surface layer of the roof member or the exterior wall member both having the three-layer structure, and then the pair of cutting blades cuts through the rubber sheet such that the pair of cutting blades and the pair of blade bodies enter under the rubber sheet.

The present invention may be configured such that, when the screw is half rotated (rotated through half a revolution) (180 degrees) at the initial stage of the screw fastening, the whole of the large-diameter washer including the pair of cutting blades and the pair of blade bodies goes under the rubber sheet of the surface layer while the respective outer end edges of the pair of cutting blades act as the cutting blade edges to cut into the rubber sheet, and the screw shaft attains without inclination to a thin steel plate that forms a lower layer of the roof member or the exterior wall member both having the three-layer structure such that the thin steel plate is fastened to a support member by the screw.

The present invention may also be configured such that the large-diameter washer is fixed in a detent manner to the screw shaft, with a mounting hole of the large-diameter washer being press-fitted to knurled projections provided on the base of the screw shaft.

In one aspect of the present invention, the large-diameter washer is assembled to the base of the screw shaft in a detent manner, and the pair of blade bodies is provided on the respective positions that oppose to each other in the diameter direction of the large-diameter washer and that are symmetrical to each other with respect to the screw shaft. The pair of blade bodies extends in the screw fastening direction and inclines downward. The pair of cutting blades, which is provided on the respective free end of the blade bodies so as to extend in the radial direction, extends outward in the radial direction so as to incline downward. For this reason, at the initial stage of the screw fastening, the respective outer end edges of the pair of cutting blades act as cutting blade edges to cut into the rubber sheet that forms the surface layer of the roof member or the exterior wall member both having the three-layer structure. Then, the pair of cutting blades cuts through the rubber sheet such that the pair of cutting blades and the pair of blade bodies enter under the rubber sheet, and when the screw is half rotated (180 degrees) at the initial stage of the screw fastening, the whole of the large-diameter washer goes under the rubber sheet. Thus, the screw shaft goes straight ahead smoothly, without inclination, through the heat insulating material and attains to (reaches) the thin steel plate that forms the lower layer, whereby the thin steel plate is firmly and securely fastened to the support member.

Furthermore, after the cut up portions made by the pair of cutting blades and the head of the screw have been passed, there remains only a shrunk hole having a small diameter in the rubber sheet of the surface layer. Thus, it would not cause any problem. However, the shrunk hole may be covered by a patch sheet, if necessary.

### BRIEF DESCRIPTION OF THE DRAWINGS

FIG. 1 is a front view showing a screw according to the present invention.
FIG. 2 is a front view showing a screw shaft that constitutes the screw according to the present invention.
FIG. 3 is a plan view showing the screw shaft that constitutes the screw according to the present invention.
FIG. 4 is a cross-sectional view taken along the line 4-4 of FIG. 2.
FIG. 5 is a plan view showing a large-diameter washer that constitutes the screw according to the present invention.
FIG. 6 is a view on arrow taken in a direction of the arrow 6-6 of FIG. 5.
FIG. 7 is a view on arrow taken in a direction of the arrow 7-7 of FIG. 5.
FIG. 8 is a main part longitudinal sectional view showing a use example of the screw used for fixing a roof member having a three-layer structure to a support member according to the present invention.
FIG. 9 is a main part enlarged explanatory view showing an initial stage of screw fastening according to the present invention.
FIG. 10 is a main part enlarged explanatory view showing a state in which the screw is rotated substantially 90 degrees in a fastening direction from the initial stage of the screw fastening according to the present invention.
FIG. 11 is a main part enlarged explanatory view showing a state in which the screw is rotated substantially 135 degrees in the fastening direction from the initial stage of the screw fastening according to the present invention.
FIG. 12 is a main part enlarged explanatory view, viewed in a plan view, showing a use example of the screw and a state in which the screw is rotated substantially 180 degrees (makes a half turn) in the fastening direction from the initial stage of the screw fastening according to the present invention.
FIG. 13 is an explanatory view showing a conventional method for fixing a roof member having a three-layer structure to a support member.
FIG. 14 is an explanatory view showing a use state of a screw according to Patent Document 1.

### BEST MODE FOR CARRYING OUT THE INVENTION

Hereinafter, a preferred embodiment of the present invention will be described with reference to the drawings.

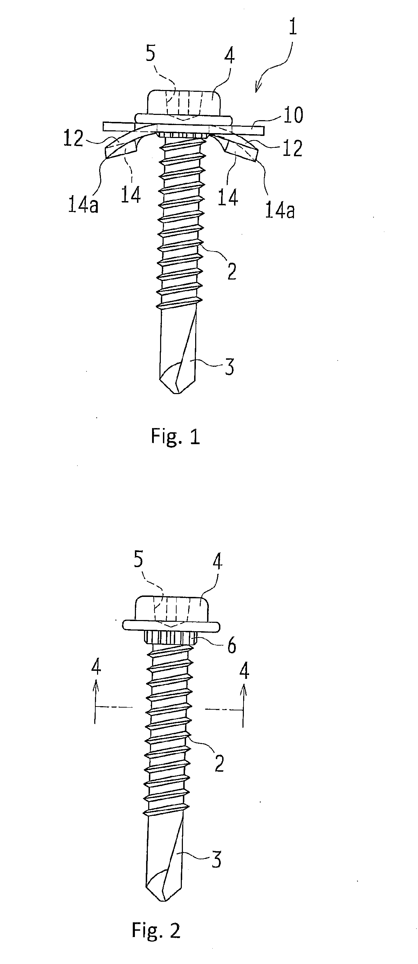

FIG. 1 shows a screw 1 according to the present invention. The screw 1 includes: a drill 3 as a pointed boring portion provided on a front end of the screw 1; a screw shaft 2, having a head 4 on a rear end thereof, the head 4 being provided with a torque transmitting hole 5 having a biting function; and a large-diameter washer 10 being assembled, in a detent manner, to a base of the screw shaft 2 just below the head 4.

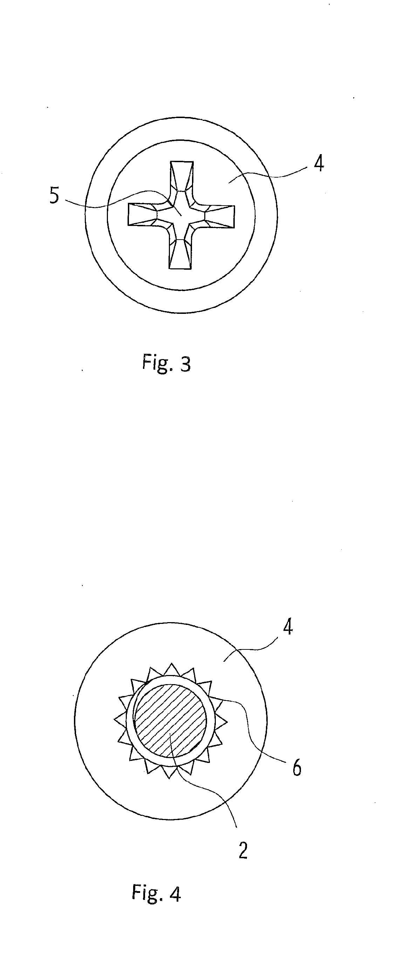

As shown in FIGS. 2 and 4, vertical knurled projections 6 are provided on the base of the screw shaft 2 just below the head 4.

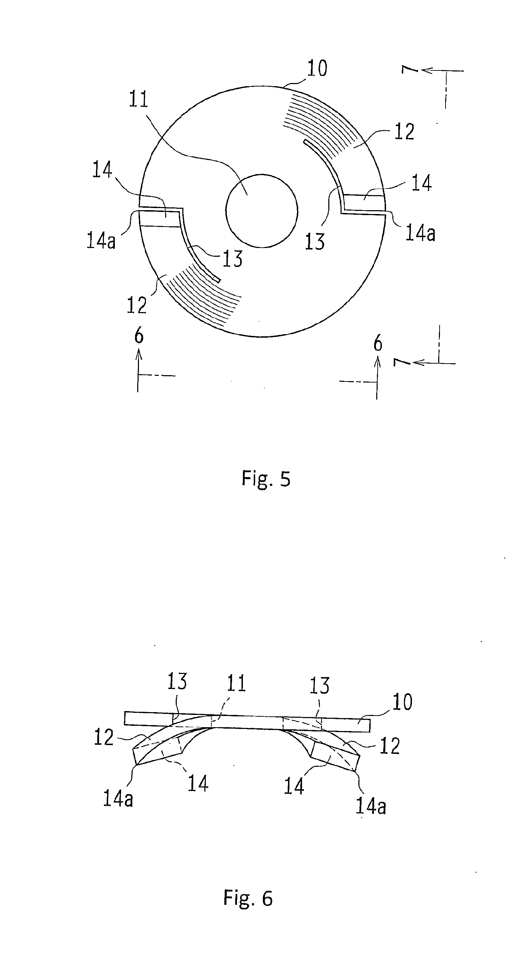

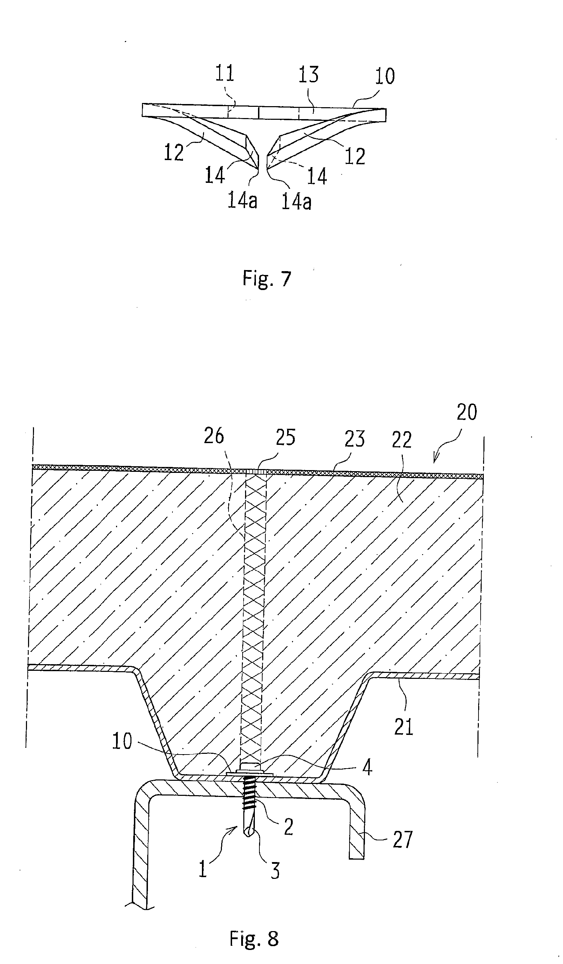

A shown in FIGS. 5 through 7, the large-diameter washer 10 is made of a steel plate that is punched and bent, as is the case with an ordinary flat washer. The large-diameter washer 10 has a diameter substantially four times larger than the outer diameter of the screw shaft 2. A mounting hole 11 is provided in the central portion of the large-diameter washer 10. A pair of blade bodies 12, 12 is provided on respective positions that oppose to each other in the diameter direction of the large-diameter washer 10 and that are symmetrical to each other with respect to the mounting hole 11. The pair of blade bodies 12, 12 is each formed by an arc-shaped plate piece that extends in a screw fastening direction and inclines downward. The arc-shaped plate piece is defined by a cut out portion 13 that is formed by punching and cutting out the large-diameter washer 10 from the outer peripheral edge to the center and next in the circumferential direction. A pair of cutting blades 14, 14 is provided on respective free ends of the blade bodies 12, 12. As shown in FIGS. 6 and 7, the pair of cutting blades 14, 14 extends outward in a radial direction so as to incline downward. Respective outer end edges of the cutting blades 14, 14 act as cutting blade edges 14a, 14a at an initial stage of screw fastening.

The large-diameter washer 10 having the above-described configuration is fixed in a detent manner to the screw shaft 2, with the mounting hole 11 being press-fitted to the knurled projections 6 on the base of the screw shaft 2. Thus, the screw 1 according to the present invention as shown in FIG. 1 is made.

FIG. 8 shows a use example of the screw 1 of the present invention that is used for fixing a roof member 20 having a three-layer structure to a steel base support member 27. The roof member 20 has the three-layer structure that is made up of a thin steel plate 21 irregularly shaped as a folded-plate roof, a heat insulating material 22 that is made of high density styrene foam having an excellent heat keeping effect and that is attached on the thin steel plate 21, and a rubber sheet 23 that covers a surface layer of the heat insulating material 22. Such a roof is commonly called a sandwich panel. In FIG. 8, a hole 25 is made in a rubber sheet 23 by the drill 3 of the screw 1, which will be described later. The hole 25 has been shrunk after passing of the head 4. Furthermore, a bored hole 26 is made after passing of the screw 1 through the heat insulating material 22. In the bored hole 26, there are stored scraps of the heat insulating material that is crushed by the cutting blades 14, 14 of the large-diameter washer 10.

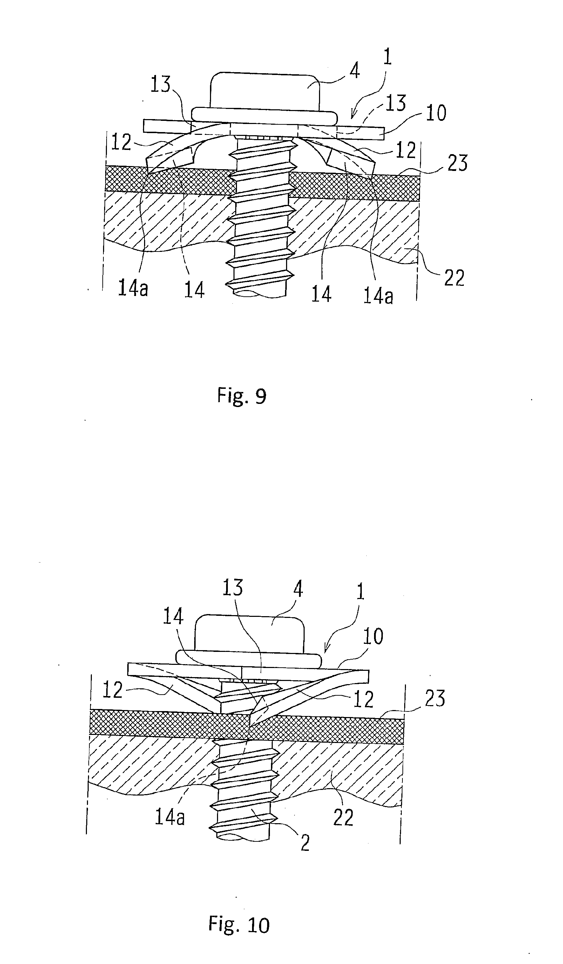

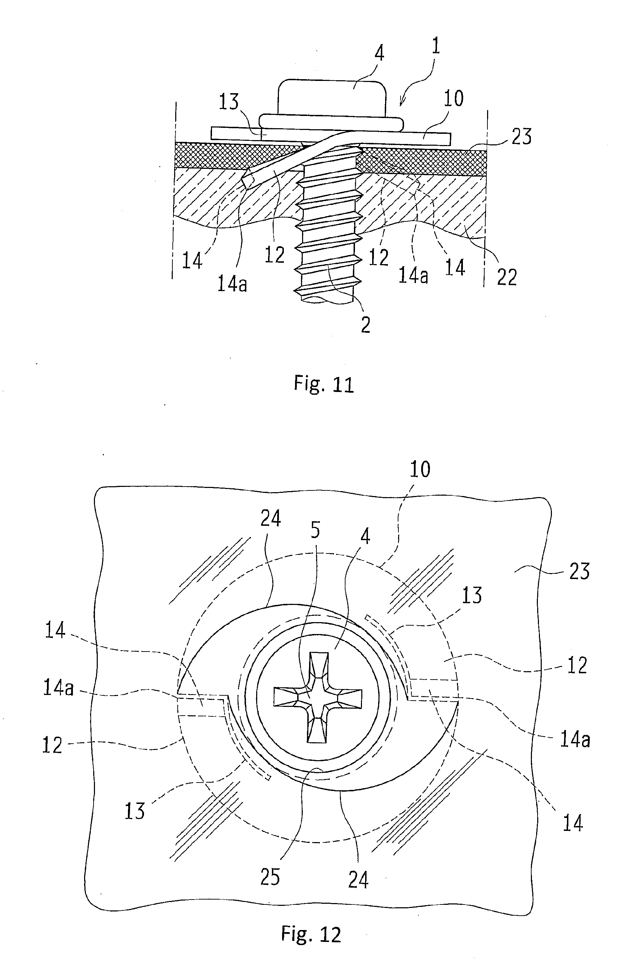

FIGS. 9 through 12 show the initial stage of the screw fastening in which the drill 3 of the screw 1 of the present invention makes a hole in the rubber sheet 23 of the surface layer of the roof member 20 having the three-layer structure, whereby the drill 3 enters the heat insulating material 22. In the initial stage of the screw fastening shown in FIG. 9, a hole is made in the rubber sheet 23 and the heat insulating material 22 by the drill 3 of the screw 1 and the screw shaft 2 is screwed in the hole. The rubber 23 is cut in by the pair of cutting blade edges 14a, 14a, opposing to each other, formed as respective outer end edges of the pair of the cutting blades 14, 14 opposing to each other that is provided on the large-diameter washer 10. As the screw 1 is rotated in the screw fastening direction from the above state, the pair of cutting blades 14, 14 opposing to each other cuts up the rubber sheet 23 to enter under the rubber sheet 23, as shown in FIGS. 10 and 11. As shown in FIG. 12, when the screw 1 is rotated 180 degrees (makes a half turn), cut up portions 24, 24, which are cut up by the pair of cutting blades 14, 14, are formed in a parabolic shape. Via the cut up portions 24, 24, the whole of the large-diameter washer 10 including the pair of blade bodies 12, 12 opposing to each other goes under the rubber sheet 23. Furthermore, when the screw 1 is rotated in the screw fastening direction and enters the heat insulating material 22, the head 4 of the screw 1 widens the hole in the rubber sheet 23 made by the drill 3 so as to enter the heat insulating material 22.

Thus, once the head 4 of the screw 1 and the large-diameter washer 10 enter the heat insulating material 22, the pair of cutting blades 14, 14 opposing to each other is helically turned and moves through the heat insulating material 22 as the screw 1 is rotated in the screw fastening direction. Thus, the screw shaft 2 goes straight ahead without inclination and the drill 3 attains to (reaches) the thin steel plate 21 of the lower layer. A pilot hole is made in the thin steel plate 21 and the support member 27 by the drill 3 such that the screw shaft 2 is screwed in the pilot hole. In this way, the thin steel plate 21 is firmly and securely fixed to the support member 27.

While the preferred embodiment of the present invention has been described with reference to the drawings, the present invention should not be limited thereto. It will be obvious to those skilled in the art that various changes and modifications may be made within the scope of the appended claims. Furthermore, all such changes and modifications are deemed to be within the scope of the present invention.

## Claims

1. A screw (1) for fixing a roof member (20) or an exterior wall member both having a three-layer structure, comprising:
a screw shaft (2) including a pointed boring portion (3) on a front end thereof, and a head (4) on a rear end thereof, the head (4) having a torque transmitting hole (5); and
a large-diameter washer (10) assembled, in a detent manner, to a base of the screw shaft (2) just below the head (4), the large-diameter washer (10) having first and second blade bodies (12) extending in a screw fastening direction and inclining downward toward the pointed boring portion (3), each blade body (12) having, on a free end thereof, a cutting blade (14) extending in a radial direction;
wherein the first and second blade bodies (12) are provided on respective positions that are opposite each other in a diameter direction of the large-diameter washer (10) and that are symmetrical to each other with respect to the screw shaft (2),
wherein the first and second cutting blades (14) that are provided on the respective free ends of the first and second blade bodies (12) each extend outward in a radial direction so as to incline downward,
whereby, at an initial stage of screw fastening, respective outer end edges of the first and second cutting blades (14) act as cutting blade edges (14a) to cut into a rubber sheet (23) that forms a surface layer of the roof member (20) or the exterior wall member both having the three-layer structure, and then the first and second cutting blades (14) cut through the rubber sheet (23) such that the first and second cutting blades (14) and the first and second blade bodies (12) enter under the rubber sheet (23).

2. The screw (1) for fixing the roof member (20) or the exterior wall member both having the three-layer structure according to claim 1,
wherein, when the screw (1) is half rotated (180 degrees) at the initial stage of the screw fastening, the whole of the large-diameter washer (10) including the first and second cutting blades (14) and the first and second blade bodies (12) goes under the rubber sheet (23) of the surface layer while the respective outer end edges of the first and second cutting blades (14) act as the cutting blade edges (14a) to cut into the rubber sheet (23), and
wherein the screw shaft (2) attains without inclination to a thin steel plate (21) that forms a lower layer of the roof member (20) or the exterior wall member both having the three-layer structure such that the thin steel plate (21) is fastened to a support member (27) by the screw (1).

3. The screw (1) for fixing the roof member (20) or the exterior wall member both having the three-layer structure according to claim 1 or 2,
wherein the large-diameter washer (10) is fixed, in a detent manner, to the screw shaft (2), with a central hole (11) of the large-diameter washer (10) being press-fitted to knurled projections (6) provided on the base of the screw shaft (2).
